# EUROPEAN PATENT SPECIFICATION

(11) **EP 2 083 287 B1**
(45) Date of publication and mention of the grant of the patent: **29.08.2018**
(21) Application number: 09001021.6
(22) Date of filing: 26.01.2009
(51) Int. Cl.: G02B 1/10, C08K 3/22, C08J 7/04

(54) **Process for producing an optical article**
Herstellungsverfahren für optischen Artikel
Procédé de production de l'article optique

(30) Priority: 28.01.2008 JP 2008016578; 09.09.2008 JP 2008231253; 16.10.2008 JP 2008267854
(43) Date of publication of application: 29.07.2009
(73) Proprietor: EHS Lens Philippines, Inc., Cavite (PH)
(72) Inventor: NAITO, Shuji, Suwa-shi, Nagano 392-8502 (JP); SUGIHARA, Yosuke, Suwa-shi, Nagano 392-8502 (JP)
(74) Representative: Hoffmann Eitle

(56) References cited:
- EP-A- 0 578 198
- WO-A-2007/043301
- JP-A- H08 248 204
- JP-A- 2000 284 235
- JP-B2- 3 982 933
- US-A1- 2004 209 084
- Dai-Ichi Kogyo Seiyaku Co., Ltd: "Superflex catalogue", , Retrieved from the Internet: URL:http://www.dks-web.jp/download/img/cat adata/superflex.pdf [retrieved on 2013-04-25]

## Description

### BACKGROUND

### 1. Technical Field

The present invention relates to a process for producing a plastic lens for spectacles, cameras, and the like.

### 2. Related Art

Plastic lenses are lightweight and excellent in moldability, processability, dyeability, etc. and less likely to crack and have high safety as compared with glass lenses. Therefore, their use has rapidly spread in the field of lenses for spectacles and they make up a large portion thereof. Further, recently, in order to meet an additional demand of reducing the thickness and weight, a material having a high refractive index such as a thiourethane resin or an episulfide resin has been developed. For example, a process for producing an episulfide resin having a very high refractive index by polymerization of a compound having an epithio group (an episulfide compound) in the presence of sulfur has been proposed (see JP-A-2004-002712 and JP-A-2005-281527). Such an episulfide resin can easily exhibit a high refractive index of 1.7 or higher and is effective in reducing the thickness of lenses for spectacles.

On the other hand, when the refractive index of a lens substrate is increased, a primer layer and a hard coat layer should have a refractive index equal to that of the lens substrate for preventing the occurrence of interference fringe. For example, in general, any of various metal oxides is incorporated in the hard coat layer as a filler thereby increasing the refractive index. As the metal oxide, titanium oxide is mainly used because it has a high refractive index and also is excellent in stability and transparency in the visible light range. However, titanium oxide has a property of exhibiting a photocatalytic activity under ultraviolet radiation. Therefore, when titanium oxide is used as a filler in the hard coat layer, it decomposes a binder component composed of an organic resin therearound, and the coat layer is often peeled off. As- one of the measures for this problem, rutile-type titanium oxide which exhibits a relatively lower photocatalytic activity is often used as the titanium oxide rather than anatase-type titanium oxide which is likely to exhibit a strong photocatalytic activity (for example, see JP-A-2007-102096).

However, the use of rutile-type titanium oxide does not completely solve the problem of the photocatalytic activity, and an attempt has also been made to further reduce the photocatalytic activity by coating the surface thereof with an insulating material such as silicon dioxide, but this is not always sufficient. Accordingly, when light resistance is considered, a method of increasing the content of rutile-type titanium oxide in the coating layer could not simply increase the refractive index of a hard coat layer or a primer layer, and when a lens substrate has a refractive index of 1.7 or higher, it may not be possible to completely prevent the occurrence of an interference fringe.

### SUMMARY

An advantage of some aspects of the invention is a process for producing a plastic lens which includes a plastic lens substrate, a primer layer, and a hard coat layer, causes almost no interference fringe, and is excellent in light resistance.

A process for producing a plastic lens according to the invention is defined in claim 1.

The phrase "a coating composition not containing titanium oxide" as used herein means metal oxide fine particles which do not contain titanium oxide, and, for example, silicon oxide (SiO₂), tin oxide (SnO₂), zirconium oxide (ZrO₂), and the like are exemplified. These may be used as a simple substance, or as composite fine particles.

In accordance with the invention, as the coating composition for forming the primer layer, not only a polyurethane resin and metal oxide fine particles are used, but also an organosilicon compound is used in combination. Therefore, a space portion in the primer layer is filled with the organosilicon compound (component (C)), and thus the density of the interior of the primer layer is increased. Accordingly, even when a substrate having a high refractive index is used, a difference in the refractive index at the interface between the substrate and the primer layer can be controlled to be small, and therefore, the occurrence of interference fringe can be prevented.

On the other hand, because the components as described above are used as the coating composition for forming the primer layer, the density of the primer layer in the vicinity of the surface thereof can be maintained low. That is, an interior layer (an intermediate portion to the vicinity of the substrate) of the primer layer has a high refractive index, but a surface layer of the primer layer has a low refractive index. Therefore, even when metal oxide fine particles having a relatively lower refractive index than titanium oxide of such as silicon oxide (SiO₂) or tin oxide (SnO₂) are used in the hard coat layer, the occurrence of interference fringe can be prevented. Further, the metal oxide fine particles to be incorporated in the hard coat layer as the component (D) are not photoactive unlike titanium oxide, therefore, an optical article excellent in scratch resistance as well as light resistance can be provided. As the component (D), fine particles containing silicon oxide are preferred from the viewpoint of light resistance and scratch resistance, and for example, colloidal silica is preferred.

As the plastic substrate, a plastic substrate which is obtained by polymerizing and curing a polymerizable composition containing an episulfide compound as a main component and has a refractive index of 1.7 or higher is preferred. In case the plastic substrate has a high refractive index of 1.7 or higher, the reduction of the thickness of the substrate for an optical article such as a lens is easy, and further, an optical article having few interference fringes can be provided easily.

In accordance with the invention, the average particle diameters of the component (A) and the component (B) in the coating composition are from 5 to 50 nm, respectively, and the average particle diameter of the component (C) is 5 nm or less.

In accordance with this aspect, the average particle diameters of the component (A) and the component (B), and the average particle diameter of the component (C) each fall within a predetermined range, therefore, the refractive index of the primer layer can be further improved. As a result, even when a plastic substrate having a high refractive index of 1.7 or higher is used, the occurrence of interference fringe can be effectively prevented. The mechanism of this action is not always clearly perceived, however, in the absence of the component (C), even when the refractive index of metal oxide fine particles as the component (B) is increased or the ratio thereof is increased, the refractive index of the primer layer is not improved so much. Therefore, it is presumed that as the mechanism of action for achieving the above-mentioned effect, because the average particle diameters of the above-mentioned respective particles fall within a predetermined range, the component (C) enters into a space formed by the particles composed of the component (A) and the particles composed of the component (B), resulting in forming a dense layer at such a portion and contributing to the improvement of refractive index. The average particle diameters of the above-mentioned respective particles can be obtained by a light scattering method.

In accordance with an aspect of the invention, it is preferred that the refractive index of the primer layer decreases continuously or stepwise from the side of the plastic substrate toward the side of the hard coat layer.

In accordance with this aspect, the refractive index of the primer layer decreases continuously or stepwise from the side of the plastic substrate toward the side of the hard coat layer, therefore, the refractive index of the hard coat layer can be decreased. That is, even when the refractive index of the hard coat layer is low, a difference in the refractive index with the primer layer can be made small, therefore, the occurrence of interference fringe can be prevented.

In the past, in the case where a hard coat layer was formed on a surface of an optical article such as an optical lens, when the refractive index of a substrate was high, it was necessary that the a primer layer and the hard coat layer should have a high refractive index in response thereto. In accordance with this aspect, it is not necessary to stick to increase the refractive index of the hard coat layer, and therefore, the degree of freedom of designing of the hard coat layer is increased.

In accordance with an aspect of the invention, it is preferred that a difference between the refractive index of the primer layer in the vicinity of the plastic substrate and the refractive index of the plastic substrate is 0.01 or less.

In accordance with this aspect, a difference between the refractive index of the primer layer in the vicinity of the plastic substrate and the refractive index of the plastic substrate is a predetermined value or less, therefore, the occurrence of interference fringe can be effectively prevented.

In accordance with an aspect of the invention, it is preferred that a difference between the refractive index of the primer layer in the vicinity of the hard coat layer and the refractive index of the hard coat layer is 0.01 or less.

In accordance with this aspect, a difference between the refractive index of the primer layer in the vicinity of the hard coat layer and the refractive index of the hard coat layer is a predetermined value or less, therefore, the occurrence of interference fringe can be effectively prevented.

In accordance with an aspect of the invention, it is preferred that the component (C) is an organosilicon compound having an epoxy group.

In accordance with this aspect, the organosilicon compound has an epoxy group, therefore, the adhesion of the primer layer to the plastic substrate and the hard coat layer is excellent. Further, the crosslink density of the primer layer is appropriately controlled, therefore, the resulting optical article is excellent in impact resistance.

In accordance with an aspect of the invention, it is preferred that the component (C) is an organoalkoxysilane compound and the organoalkoxysilane compound is used in the form of an unhydrolyzed monomer.

In accordance with this aspect, the organoalkoxysilane compound is used in the form of an unhydrolyzed monomer, therefore, it is easily filled in a space portion in the primer layer as compared with the case where it is polymerized by hydrolysis. Accordingly, the refractive index of the primer layer is further improved, and the occurrence of interference fringe can be prevented although an episulfide plastic substrate having a refractive index of 1.7 or higher is used.

In accordance with an aspect of the invention, it is preferred that the ratio of the component (C) to the total components (A) to (C) is from 0.1 to 5% by mass.

In accordance with this aspect, the ratio of the organosilicon compound as the component (C) is 0.1% by mass or more, therefore, the adhesion to the plastic substrate and the hard coat layer is superior. In addition, because the ratio of the organosilicon compound is 5% by mass or less, a decrease in the refractive index and abrasion resistance is not caused.

In accordance with an aspect of the invention, it is preferred that the component (B) is metal oxide fine particles surface-treated with an organosilicon compound having an alkyl group.

In accordance with this aspect, by using a polyurethane resin and metal oxide fine particles surface-treated with an organosilicon compound having an alkyl group such as a methyl group, the compatibility between the resin component and the metal oxide fine particle component is improved in the primer layer, and as a result, the homogeneity is improved. Therefore, the occurrence of interference fringe is prevented and the impact resistance is also improved. Further, when the homogeneity of the primer layer is improved, the homogeneity of spaces to be filled with an organosilicon compound as the component (C) is also improved at the same time, and as a result, the refractive index of the primer layer is further improved and the occurrence of interference fringe can be more effectively prevented.

In accordance with the invention, the component (B) is metal oxide fine particles containing titanium oxide having a rutile-type crystal structure as a main component.

In accordance with this aspect, metal oxide fine particles containing titanium oxide having a rutile-type crystal structure as a main component are used as the component (B), therefore, not only the refractive index of the primer layer is improved, but also the light resistance is improved. In particular, a polyurethane resin to be used as the component (A) greatly contributes to the improvement of light resistance.

In accordance with an aspect of the invention, it is preferred that the ratio of the component (B) to the total components (A) to (C) is from 40 to 80% by mass.

In accordance with this aspect, the ratio of the metal oxide particles as the component (B) to the total components (A) to (C) falls within a predetermined range of from 40 to 80% by mass, therefore, the refractive index of the primer layer can be sufficiently increased, and also the crosslink density of the primer layer can be appropriately maintained, and further, the hardness and impact resistance are not impaired.

In accordance with the invention, the optical article is a plastic lens.

In accordance with this aspect, a substrate having a refractive index of 1.7 or higher, i.e., having a high refractive index is used, and moreover, a primer layer is formed from the above-mentioned components (A) to (C), therefore, a plastic lens which is very thin and is excellent in impact resistance and causes almost no interference fringe can be provided. Accordingly, the plastic lens according to an aspect of the invention can be widely used as a variety of thin-type optical lenses such as lenses for spectacles, lenses for cameras, lenses for telescopes, lenses for microscopes and collective lenses for steppers.

### DESCRIPTION OF EXEMPLARY EMBODIMENTS

Hereinafter, aspects of the process for producing a plastic lens of the present invention will be described in detail.

An optical article produced by the inventive process a plastic lens for spectacles and has a plastic lens substrate (hereinafter also referred to as merely a "lens substrate"), a primer layer formed on a surface of the lens substrate and a hard coat layer formed on the upper surface of the primer layer. Further, in the plastic lens an antireflection layer can be formed on the upper surface of the hard coat layer. Hereinafter, the lens substrate, primer layer, hard coat layer and antireflection layer will be described. 1. Lens substrate

The lens substrate is not particularly limited as long as it is a plastic resin, however, in light of reduction of the thickness of a lens for spectacles or for obtaining a difference in the refractive index with the antireflection layer formed on the upper layer of the surface of the lens substrate, a plastic resin having a refractive index of preferably 1.65 or higher, more preferably 1.7 or higher, further more preferably 1.74 or higher, most preferably 1.76 or higher is used.

Examples of a lens material having a refractive index of 1.65 or higher include a polythiourethane plastic produced by reacting a compound having an isocyanate group or an isothiocyanate group with a compound having a mercapto group and an episulfide plastic produced by polymerizing and curing a raw material monomer including a compound having an episulfide group.

As the compound having an isocyanate group or an isothiocyanate group to be a main component of a polythiourethane plastic, a known compound can be used. Specific examples of the compound having an isocyanate group include ethylene diisocyanate, trimethylene diisocyanate, 2,4,4-trimethylhexane diisocyanate, hexamethylene diisocyanate, and m-xylylene diisocyanate.

As the compound having a mercapto group, a known compound can be used, and examples thereof include an aliphatic polythiols such as 1,2-ethanedithiol, 1,6-hexanedithiol, and 1,1-cyclohexanedithiol; and aromatic polythiols such as 1,2-dimercaptobenzene and 1,2,3-tris(mercaptomethyl)benzene. In order to increase the refractive index of a plastic lens, a polythiol containing a sulfur atom in addition to a mercapto group is more preferably used, and specific examples thereof include 1,2-bis(mercaptomethylthio)benzene, 1,2,3-tris(mercaptoethylthio)benzene, and 1,2-bis((2-mercaptoethyl)thio)-3-mercaptopropane.

Further, a plastic resin obtained by polymerizing and curing a polymerizable composition containing an episulfide compound as a main component so as to have a refractive index of 1.7 or higher, preferably higher than 1.7 is also preferably used.

As the episulfide compound, a known compound having an episulfide group can be used without any limitation. Specific examples thereof include an episulfide compound obtained by substituting a part or all of oxygen of the epoxy group of an existing epoxy compound with sulfur. Further, in order to increase the refractive index of a lens substrate, a compound containing a sulfur atom in addition to an episulfide group is preferably used, and specific examples thereof include 1,2-bis(β-epithiopropylthio)ethane, bis(β-epithiopropyl) sulfide, 1,4-bis(β-epithiopropylthiomethyl)benzene, 2,5-bis(β-epithiopropylthiomethyl)-1,4-dithiane, and bis(β-epithiopropyl)disulfide. These episulfide compounds may be used alone or in admixture thereof.

The lens substrate can be obtained by mixing the above-mentioned episulfide compound as a monomer and a given catalyst and optionally sulfur, casting the resulting mixture into a glass of metal mold and effecting so-called cast-molding polymerization. By performing polymerization in the presence of sulfur, a lens substrate having a high refractive index of 1.74 or higher is easily obtained. When sulfur is mixed, the amount of sulfur is preferably from 0.1 to 25 parts by mass, more preferably from 1 to 20 parts by mass based on 100 parts by mass of the episulfide compound.

Examples of the catalyst to be used in the polymerization include amines, phosphines, quaternary ammonium salts, quaternary phosphonium salts, tertiary sulfonium salts, secondary iodonium salts, mineral acids, Lewis acids, organic acids, silicic acids, and tetrafluoroboric acids.

Among these, preferred examples of the catalyst include amines such as aminoethanol and 1-aminopropanol, quaternary ammonium salts such as tetrabutyl ammonium bromide, and quaternary phosphonium salts such as tetramethyl phosphonium chloride and tetramethyl phosphonium bromide.

Further, the catalyst to be used should be selected according to the type of monomer to be used, and also the addition amount thereof should be adjusted, however, in general, the addition amount thereof is preferably from 0.001 to 0.1% by mass based on the total amount of the lens substrate raw material.

The polymerization temperature is preferably from about 5 to 120°C, and the reaction time is from about 1 to 72 hours. After completion of the polymerization, in order to remove lens substrate strain, an annealing treatment at 50 to 150°C for about 10 minutes to 5 hours is preferably performed.

When the above-mentioned polymerizable composition is prepared, it is also preferred that a polyisocyanate compound and/or a polythiol compound are/is further mixed as another monomer.

By allowing not only an episulfide compound, but also a polyisocyanate compound or a polythiol compound to participate in polymerization, a lens substrate having more excellent dyeability and heat resistance can be obtained.

Further, in the polymerizable composition, any of various known additives such as an ultraviolet absorber, an infrared absorber, a light stabilizer, an internal mold release agent, an antioxidant, a dye, a photochromic dye, a pigment, and an antistatic agent can be blended as needed.

### 2. Primer layer

The primer layer is formed on the outermost surface of the lens substrate and is present at the interface between the lens substrate and the hard coat layer, which will be mentioned later, and basically has a property of exhibiting adhesion to both lens substrate and hard coat layer and impact resistance.

The primer layer according to the invention is formed from a coating composition containing the following components (A) to (C):
(A) a polyurethane resin;
(B) metal oxide fine particles; and
(C) an organosilicon compound.

The polyurethane resin as the component (A) exhibits adhesion to both lens substrate and hard coat layer. Further, the polyurethane resin has a superior effect of improving light resistance as compared with the case where another resin such as a polyester resin is used.

The polyurethane resin is not particularly limited, and a water-soluble or water-dispersible polyurethane resin obtained by reacting a diisocyanate compound with a diol compound can be used. Further, one type or two or more types of polyurethane resins can be used. Examples of the diisocyanate compound include alicyclic diisocyanate compounds such as hexamethylene diisocyanate, 2,2,4-trimethylhexamethylene diisocyanate, hydrogenerated xylylene diisocyanate, 1,4-cyclohexane diisocyanate and 4,4-dicyclohexylmethane diisocyanate; aromatic aliphatic diisocyanate compounds such as xylylene diisocyanate and tetramethylxylylene diisocyanate; aromatic diisocyanate compounds such as tolylene diisocyanate and phenylmethane diisocyanate; and modified compounds of these diisocyanates (such as carbodiimide-, uretodione-, and uretoimine-containing modified compounds).

Examples of the diol compound include diol compounds obtained by (co)polymerization of an alkylene oxide such as ethylene oxide or propylene oxide or a heterocyclic ether such as tetrahydrofuran. Specific examples of the diol compound include polyether diols such as polyethylene glycol, polypropylene glycol, polytetramethylene ether glycol, and polyhexamethylene ether glycol; polyester diols such as polyethylene adipate, polybutylene adipate, polyneopentyl adipate, poly-3-methylpentyl adipate, polyethylene/butylene adipate, and polyneopentyl/hexyl adipate; polylactone diols such as polycaprolactone diol; and polycarbonate diols. Among these, one or more diol compounds selected from polyether diols, polyester diols and polycarbonate diols are preferred.

Preferred examples of the polyurethane resin include polyether polyurethane resins, polyester polyurethane resins, and polycarbonate polyurethane resins obtained by using a polyether diol, a polyester diol, or a polycarbonate diol as a diol compound. The form of the polyurethane resin is also not particularly limited. Typically, an emulsion type, for example, a self-emulsified emulsion and a self-stabilized emulsion can be exemplified. In particular, among the above-mentioned compounds, preferred is a polyurethane resin in which a diol having an acidic group such as a carboxylic acid group or a sulfonic acid group is used, or a polyhydroxy compound having a low molecular weight is added, or an acidic group is introduced, and particularly preferred is a polyurethane resin having a carboxyl group. Further, from the viewpoint of improvement of gloss, scratch resistance and the like, it is preferred that a functional group such as a carboxyl group is crosslinked through a crosslinking treatment.

The polyurethane resin as the component (A) is present as fine particles in the coating composition, and the average particle diameter of the polyurethane resin is from 5 to 50 nm, and more preferably from 20 to 30 nm. When the average particle diameter of the polyurethane resin is less than 5 nm or exceeds 50 nm, a synergistic effect with the component (B) or the component (C), which will be mentioned later, may not be exhibited, and it may become difficult to improve the refractive index of the primer layer. The particle diameter of the polyurethane resin can be controlled by the production condition or molecular weight of the polyurethane resin, the stirring speed for the coating composition or the like.

The average particle diameter of the polyurethane resin as fine particles is measured by a light scattering method. For example, by using a dynamic light scattering particle size distribution analyzer (manufactured by Horiba Seisakusho K.K., trade name: LB-550), the particle diameter distribution and average particle diameter can be measured.

The blending amount of the polyurethane resin is preferably from 20 to 60% by mass and more preferably from 30 to 50% by mass based on the total amount of the components (A) to (C) in the coating composition. When the blending amount of the polyurethane resin is less than 20% by mass, the impact resistance or light resistance of a final product in the case where a spectacle lens is formed as the final product may be insufficient. Further, when the blending amount of the polyurethane resin exceeds 60% by mass, the refractive index of the primer layer is decreased, and an interference fringe may be caused, and the appearance of the resulting spectacle lens may be deteriorated.

Preferred specific examples of the polyurethane resin include NeoRez R-960 (manufactured by Zeneca), Hydran AP-30 (manufactured by Dainippon Ink & Chemicals, Inc.), Superflex 210 (manufactured by Dai-ichi Kogyo Seiyaku Co., Ltd.), Izelax S-1020 (manufactured by Hodogaya Chemical Co., Ltd.), Neotan UE-5000 (manufactured by Toagosei Co., Ltd.), RU-40 series (manufactured by Stal Japan), WF-41 series (manufactured by Stal Japan), and WPC-101 (manufactured by Japan Urethane Industry).

The metal oxide fine particles as the component (B) not only intend to improve the refractive index of the primer layer, but also contribute to the improvement of water resistance, weather resistance, and light resistance by serving as a filler to increase the crosslink density of the primer layer.

As the metal oxide fine particles, fine particles containing titanium oxide are preferred, and particularly from the viewpoint of light resistance, composite metal oxide fine particles containing titanium oxide having a rutile-type crystal structure are more preferably used. Examples of the composite metal oxide fine particles include fine particles which are composed of titanium oxide and tin oxide, or titanium oxide, tin oxide and silicon oxide, have a rutile-type crystal structure, and have an average particle diameter of from 1 to 200 nm.

By using metal oxide fine particles containing titanium oxide having a rutile-type crystal structure, the weather resistance and light resistance are further improved. Further, the refractive index of a rutile-type crystal is higher than that of an anatase-type crystal, therefore, metal oxide fine particles (composite fine particles) having a relatively high refractive index can be obtained.

Further, the metal oxide fine particles as the component (B) are preferably surface-treated with an organosilicon compound having an alkyl group such as a methyl group. As the organosilicon compound having an alkyl group, among the organosilicon compounds to be used as the component (C), which will be mentioned later, an organosilicon compound having an alkyl group is preferably used.

By using metal oxide fine particles surface-treated with an organosilicon compound having an alkyl group, the compatibility with the polyurethane resin is improved, and as a result, the homogeneity is improved. Therefore, the occurrence of interference fringe is prevented and also the impact resistance of a spectacle lens is improved in the end. Further, when the homogeneity of the primer layer is improved, the homogeneity of spaces to be filled with the organosilicon compound as the component (C) is also improved at the same time, and as a result, the refractive index of the primer layer is further improved and the occurrence of interference fringe can be more effectively prevented.

The type or blending amount of the component (B) is determined according to the intended refractive index, hardness, or the like.

The metal oxide fine particles as the component (B) have an average particle diameter of from 5 to 50 nm, more preferably from 10 to 20 nm. When the average particle diameter is less than 5 nm or exceeds 50 nm, a synergistic effect with the component (A) or the component (C), which will be mentioned later, may not be exhibited, and it may be difficult to improve the refractive index of the primer layer. Incidentally, the average particle diameter of the metal oxide fine particles can be measured by the same method as that for the component (A).

As for the blending amount of the component (B), the ratio of the component (B) to the total components (A) to (C) in the coating composition is preferably from 40 to 70% by mass, and more preferably from 50 to 60% by mass. When the blending amount is too small, the refractive index and abrasion resistance of the coating layer may be insufficient in some cases. On the other hand, when the blending amount is too large, the impact resistance may be decreased, or a crack may be caused in the coating layer. In addition, upon dyeing, the dyeability may be decreased.

The organosilicon compound as the component (C) is filled in a space portion in the primer layer thereby increasing the density of the entire primer layer and contributing to the improvement of the refractive index. As such an organosilicon compound, a compound represented by the following formula (1) can be preferably used.

R¹R²ₙSiX¹₃₋ₙ (1)

(In the formula, R¹ represents an organic group having a polymerizable reactive group; R² represents a hydrocarbon group having 1 to 6 carbon atoms; X¹ represents a hydrolyzable group; and n represents 0 or 1.)

Examples of the organosilicon compound of the formula (1) include vinyltrialkoxysilane, vinyltrichlorosilane, vinyltri(β-methoxy-ethoxy)silane, allyltrialkoxysilane, acryloxypropyltrialkoxysilane, methacryloxypropyltrialkoxysilane, β-(3,4-epoxycyclohexyl)-ethyltrialkoxysilane, mercaptopropyltrialkoxysilane, γ-aminopropyltrialkoxysilane, and γ-glycidoxypropyltrialkoxysilane. These organosilicon compounds may be used in combination of two or more of them. Further, when a tetrafunctional organosilicon compound represented by the general formula SiX₄ (X represents an alkoxyl group) such as tetramethoxysilane or tetraethoxysilane is used, a similar effect can be obtained.

Further, it is preferred that as the component (C), an organosilicon compound having an epoxy group such as glycidoxymethyltrimethoxysilane, glycidoxymethyltriethoxysilane, α-glycidoxyethyltrimethoxysilane, α-glycidoxyethyltriethoxysilane, β-glycidoxyethyltriethoxysilane, β-glycidoxypropyltrimethoxysilane, α-glycidoxypropyltrimethoxysilane, α-glycidoxypropyltriethoxysilane, β-glycidoxypropyltriethoxysilane, γ-glycidoxypropyltrimethoxysilane, (3,4-epoxycyclohexyl)methyltrimethoxysilane, γ-glycidoxypropylvinyldiethoxysilane, γ-glycidoxypropylphenyldiethoxysilane, or δ-(3,4-epoxycyclohexyl)butyltriethoxysilane is used from the viewpoint of improving the adhesion to the plastic substrate and the hard coat layer.

The average particle diameter of the component (C) is 5 nm or less, and preferably 1 nm or less. When the average particle diameter of the component (C) exceeds 5 nm, a synergistic effect with the component (A) or the component (B) may not be exhibited, and it may be difficult to improve the refractive index of the primer layer. Incidentally, the average particle diameter of the particles formed from the component (C) can be measured by the same method as that for the component (A) or the component (B).

The ratio of the component (C) to the total components (A) to (C) in the coating composition is preferably from 0.1 to 5% by mass based on the total amount of the components (A) to (C). When the ratio of the organosilicon compound as the component (C) is less than 0.1% by mass, the adhesion to the lens substrate and the hard coat layer may not be sufficiently exhibited. On the other hand, when the ratio of the organosilicon compound exceeds 5% by mass, the abrasion resistance may be decreased.

When the above-mentioned coating composition (coating liquid) is applied, it is effective that a surface of the lens substrate is previously treated through an alkali treatment, an acid treatment, a surfactant treatment, a peeling or polishing treatment with inorganic or organic fine particles, or a plasma treatment for the purpose of improving the adhesion between the lens substrate and the primer layer. Further, as for an applying and curing method of the coating composition, the coating composition is applied using a dipping method, a spin coating method, a spray coating method, a roll coating method, a flow coating method or the like, and the resulting coating is dried by heating at a temperature of from 40 to 200°C for several hours, whereby a primer layer can be formed.

Preferably, the primer layer has a thickness in a range of from 0.01 to 50 µm, and particularly preferably from 0.1 to 30 µm. When the primer layer is too thin, the basic performance such as water resistance or impact resistance cannot be exhibited, and on the other hand, when the primer layer is too thick, surface smoothness may be deteriorated, or appearance defects such as optical strain, white turbidity or clouding may be caused in some cases.

The thickness (film thickness) and the refractive index distribution of the primer layer can be obtained by measuring the reflectance spectra of the primer layer and hard coat layer on the plastic lens substrate using a reflection spectral film thickness meter (for example, FE-3000 manufactured by Otsuka Electronics Co., Ltd.). For example, by applying curve fitting by the least-squares method to the obtained reflectance spectral data, the film thickness and the refractive index distribution in the thickness direction of the primer layer can be obtained.

When the above-mentioned coating composition is applied to the lens substrate, the refractive index of the surface layer of the primer layer can be made lower than that of the interior of the primer layer. That is, the refractive index of the primer layer can be decreased continuously or stepwise from the side of the lens substrate toward the side of the hard coat layer, which will be mentioned later.

From the viewpoint of prevention of the occurrence of interference fringe, a difference between the refractive index of the primer layer in the vicinity of the lens substrate and the refractive index of the lens substrate is preferably 0.01 or less, and also a difference between the refractive index of the primer layer in the vicinity of the hard coat layer and the refractive index of the hard coat layer is preferably 0.01 or less.

### 3. Hard coat layer

The hard coat layer is formed from a coating composition containing the following component (D):
(D) metal oxide fine particles which do not contain titanium oxide.

Here, as the component (D), for example, silicon oxide (SiO₂), tin oxide (SnO₂), zirconium oxide (ZrO₂), and the like are exemplified. These may be used as a simple substance, or as composite fine particles. The component (D) does not contain titanium oxide.

Further, the metal oxide fine particles as the component (D) in the hard coat layer are preferably dispersed in a resin binder containing an organosilicon compound and the like as raw materials. For example, a hard coat layer is formed by applying a coating composition containing metal oxide fine particles and an organosilicon compound to the surface of the above-mentioned primer layer. As the organosilicon compound, the same organosilicon compound as used for the above-mentioned primer layer can be used.

Here, the organosilicon compound serves as a binder in the hard coat layer. When it is intended to obtain a favorable adhesion, R² in the above-mentioned formula (1) is preferably an epoxy group, and when it is intended to obtain a favorable scratch resistance, R² in the above-mentioned formula (1) is preferably a methyl group.

When the coating composition (hard coat liquid) containing metal oxide fine particles and an organosilicon compound is prepared, it is preferred that a sol in which metal oxide fine particles are dispersed is mixed with an organosilicon compound. The blending amount of the metal oxide fine particles is determined according to the hardness, refractive index or the like of the hard coat layer, however, it is preferably from 5 to 80% by mass, particularly preferably from 10 to 60% by mass based on the solid content of the hard coat liquid. When the blending amount is too small, the abrasion resistance or refractive index of the hard coat layer is insufficient, and when the blending amount is too large, a crack may be caused in the hard coat layer. Further, when the hard coat layer is dyed, the dyeability may be decreased in some cases.

Further, it is very useful that the hard coat layer contains a polyfunctional epoxy compound in addition to metal oxide fine particles and an organosilicon compound. The polyfunctional epoxy compound improves the adhesion of the hard coat layer to the primer layer and also is capable of improving the water resistance of the hard coat layer and the impact resistance as a plastic lens. Examples of the polyfunctional epoxy compound include aliphatic epoxy compounds such as 1,6-hexanediol diglycidyl ether and ethylene glycol diglycidyl ether; alicyclic epoxy compounds such as isophoronediol diglycidyl ether and bis-2,2-hydroxycyclohexylpropane diglycidyl ether; and aromatic epoxy compounds such as resorcin diglycidyl ether, bisphenol A diglycidyl ether, and cresol novolac polyglycidyl ether.

Further, a curing catalyst may be added to the hard coat layer. Examples of the curing catalyst include perchloric acids such as perchloric acid, ammonium perchlorate and magnesium perchlorate; acetyl acetonates including Cu(II), Zn(II), Co(II), Ni(II), Be(II), Ce(III), Ta(III), Ti(III), Mn(III), La(III), Cr(III), V(III), Co(III), Fe(III), Al(III), Ce(IV), Zr(IV), V(IV) or the like as the central metal atom; amino acids such as amine and glycine; Lewis acids; and organic acid metal salts.

If necessary, the coating composition for forming the hard coat layer thus obtained can be used by diluting with a solvent. Examples of the solvent include alcohols, esters, ketones, ethers and aromatic solvents. Further, if necessary, a small amount of a metal chelate compound, a surfactant, an antistatic agent, an ultraviolet absorber, an antioxidant, a disperse dye, an oil-soluble dye, a pigment, a photochromic compound, a hindered amine-based or hindered phenol-based light resistance and heat resistance stabilizer or the like can be added to the coating composition for forming the hard coat layer thereby improving the coating property and curing rate of the coating liquid, and the coating performances after curing.

Further, as for an applying and curing method of the coating composition, the coating composition is applied using a dipping method, a spin coating method, a spray coating method, a roll coating method, or a flow coating method, and the resulting coating is dried by heating at a temperature of from 40 to 200°C for several hours thereby forming a hard coat layer. Further, the hard coat layer preferably has a thickness in a range of from 0.05 to 30 µm. When the thickness is less than 0.05 µm, the basic performance may not be exhibited. On the other hand, when the thickness exceeds 30 µm, surface smoothness may be deteriorated, or optical strain may be caused in some cases.

### 4. Antireflection layer

The antireflection layer is a thin layer formed on the hard coat layer as needed. The antireflection layer can be formed by, for example, alternately laminating a low refractive index layer having a refractive index of from 1.3 to 1.5 to a high refractive index layer having a refractive index of from 1.8 to 2.3. The number of layers is preferably from about 5 or 7.

Examples of an inorganic substance to be used in the respective layers constituting the antireflection layer include SiO₂, SiO, ZrO₂, TiO₂, TiO, Ti₂O₃, Ti₂O₅, Al₂O₃, TaO₂, Ta₂O₅, NbO, Nb₂O₂, NbO₂, Nb₂O₅, CeO₂, MgO, Y₂O₃, SnO₂, MgF₂, and WO₃. These inorganic substances may be used alone or in combination of two or more of them. For example, a layer of SiO₂ may be used as the low refractive index layer, and a layer of ZrO₂ may be used as the high refractive index layer.

Examples of the method of forming such an antireflection layer include a vacuum vapor deposition method, an ion plating method, and a sputtering method. In the vacuum vapor deposition method, an ion beam assist method in which an ion beam is simultaneously irradiated during deposition may be employed.

The antireflection layer may also be formed using a wet process. For example, the antireflection layer can also be formed by using a coating composition containing silica fine particles having a hollow interior (hereinafter also referred to as "hollow silica fine particles") and an organosilicon compound to form a coating in the same manner as in the case of the primer layer or the hard coat layer described above. The reason why hollow silica fine particles are used here is that by the incorporation of a gas or a solvent having a lower refractive index than that of silica in the hollow interior, the refractive index of the hollow silica fine particles is decreased as compared with silica fine particles without a hollow, and as a result, an excellent antireflection effect can be imparted. The hollow silica fine particles can be produced by the method described in JP-A-2001-233611 or the like, however, it is preferred that hollow silica fine particles having an average particle diameter of from 1 to 150 nm and a refractive index of from 1.16 to 1.39 are used. Further, as the organosilicon compound, a compound represented by the above-mentioned formula (1) can be preferably used. The antireflection layer preferably has a thickness in a range of from 50 to 150 nm. When the thickness falls outside the range and is too large or too small, a sufficient antireflection effect may not be obtained.

In addition, for the purpose of improving the water and oil repellency of the surface of the lens, an antifouling layer composed of an organosilicon compound containing fluorine may be further formed on the antireflection layer. As the organosilicon compound containing fluorine, any of the fluorine-containing silane compounds described in, for example, JP-A-2005-301208 and JP-A-2006-126782 can be preferably used.

A method in which a water-repellent treatment liquid prepared by dissolving such a fluorine-containing silane compound in an organic solvent at a given concentration is applied to the surface of an organic antireflection layer can be adopted. As the application method, a dipping method, a spin coating method, or the like can be employed. It is also possible to form the antifouling layer by a dry process such as a vacuum vapor deposition method after filling a metal pellet with the water-repellent treatment liquid.

The thickness of the antifouling layer is not particularly limited, however, it is preferably from 0.001 to 0.5 µm, and more preferably from 0.001 to 0.03 µm. When the thickness of the antifouling layer is too small, the water and oil repellent effect becomes poor, and when the thickness is too large, the surface becomes sticky, and therefore it is not preferred. Further, when the thickness of the antifouling layer is larger than 0.03 µm, the antireflection effect may be decreased, and therefore it is not preferred.

According to this embodiment, in the surface treatment step for a spectacle lens substrate, a primer layer is formed from the above-mentioned components (A) to (C), and a hard coat layer is formed from the component (D), therefore, a plastic lens for spectacles, which has few interference fringes and is excellent in light resistance and scratch resistance can be provided. In particular, the metal oxide fine particles to be incorporated in the hard coat layer as the component (D) are not photoactive unlike titanium oxide, therefore, they do not adversely affect the light resistance.

Further, when the metal oxide fine particles as the component (B) are surface-treated with an organosilicon compound having an alkyl group, the compatibility with a polyurethane resin is improved, and as a result, the homogeneity is improved. Therefore, the occurrence of interference fringe is further prevented and also the impact resistance of a spectacle lens is improved. Further, when the organosilicon compound as the component (C) has an epoxy group, the adhesion to the plastic substrate and the hard coat layer is further improved, and the scratch resistance and impact resistance are further improved.

In general, when the refractive index of a primer layer is increased in accordance with the refractive index of a lens substrate, a difference in the refractive index between the primer layer and the hard coat layer becomes large, and therefore, an interference fringe is liable to be caused. The reason is that it is difficult to increase the refractive index of a hard coat layer. However, in the primer layer according to the invention, even if the refractive index of the primer layer is increased and a difference in the refractive index with the hard coat layer is generated, an interference fringe is difficult to be caused. The reason is presumably that the refractive index of the primer layer according to the invention is sloped such that it decreases from a bulk layer toward the surface layer, and a difference in the refractive index between the outermost surface of the primer layer and the hard coat layer becomes small. In particular, the effect is significant when the average particle diameters of the component (A) and the component (B) are from 10 to 50 nm, respectively, and the average particle diameter of the component (C) is from 1 to 10 nm. Accordingly, it is not necessary to increase the refractive index of the hard coat layer by force and by using metal oxide fine particles which have a low refractive index and do not contain titanium oxide as the component (D), the degree of freedom of designing of the hard coat layer is increased.

### Examples

Subsequently, Examples and Comparative Examples based on an embodiment of the present invention will be described. Specifically, plastic lenses for spectacles were prepared by the methods described below, and various properties such as interference fringe and scratch resistance were evaluated.

### Example 1

### (1) Plastic lens substrate

As a plastic lens substrate for spectacles, SEIKO Prestage (manufactured by Seiko Epson Corporation, refractive index: 1.74) was used.

### (2) Preparation of primer composition

2900 parts by mass of methyl alcohol and 50 parts by mass of a 0.1 N aqueous solution of sodium hydroxide were placed in a stainless steel vessel, followed by sufficiently stirring. Then, 1500 parts by mass of a composite fine particle sol mainly containing titanium oxide, tin oxide, and silicon oxide (rutile-type crystal structure, methanol dispersion, surface treatment agent: γ-glycidoxypropyltrimethoxysilane, total solid content: 20% by mass, manufactured by Catalysts & Chemicals Industries Co., Ltd., trade name: Optolake) was added thereto, followed by stirring and mixing. Then, 580 parts by mass of a polyurethane resin (water dispersion, total solid content: 35% by mass, manufactured by Dai-ichi Kogyo Seiyaku Co., Ltd., trade name: Superflex 210), and 35 parts by mass of γ-glycidoxypropyltrimethoxysilane were added thereto, followed by stirring and mixing. Then, 2 parts by mass of a silicone surfactant (manufactured by Dow Corning Toray Co., Ltd., trade name: L-7604) was further added thereto, followed by stirring for a whole day and night, and then, the resulting mixture was filtered through a filter having a pore size of 2 µm, whereby a primer composition was obtained.

### (3) Preparation of hard coat composition

1000 parts by mass of Butyl Cellosolve was placed in a stainless steel vessel, and then, 1200 parts by mass of γ-glycidoxypropyltrimethoxysilane was added thereto, followed by sufficiently stirring. Then, 300 parts by mass of a 0.1 mol/L aqueous solution of hydrochloric acid was added thereto, followed by stirring for a whole day and night, whereby a silane hydrolysate was obtained. To this silane hydrolysate, 30 parts by mass of a silicone surfactant (manufactured by Dow Corning Toray Co., Ltd., trade name: L-7001) was added, followed by stirring for 1 hour. Then, 7300 parts by mass of a fine particle sol mainly containing silicon oxide (isopropanol dispersion, total solid content: 20% by mass, manufactured by Catalysts & Chemicals Industries Co., Ltd., trade name: Oscal) was added thereto, followed by stirring and mixing for 2 hours. Then, 250 parts by mass of an epoxy resin (manufactured by Nagase Kasei Kogyo K.K., trade name: EX-313) was added thereto, followed by stirring for 2 hours. Then, 20 parts by mass of iron(III) acetylacetonate was added thereto, followed by stirring for 1 hour, and then, the resulting mixture was filtered through a filter having a pore size of 2 µm, whereby a hard coat composition was obtained.

### (4) Formation of primer layer and hard coat layer

First, the plastic lens substrate obtained in the above-mentioned (1) was subjected to an alkali treatment. Specifically, the plastic lens substrate was dipped in a 2 mol/L aqueous solution of potassium hydroxide maintained at 50°C for 5 minutes and rinsed with pure water, and then, dipped in 1.0 mol/L sulfuric acid maintained at 25°C for 1 minute to perform a neutralization treatment. Then, the plastic lens substrate was rinsed with pure water, dried and left stand for cooling.

Then, the alkali-treated lens substrate was dipped in the primer composition prepared in the above-mentioned (2), dip-coated at a withdrawal rate of 400 mm/min, and baked at 70°C for 20 minutes, whereby a primer layer was formed on the surface of the substrate such that the thickness of the layer after drying became 700 nm. Subsequently, the lens substrate having the primer layer formed thereon was dipped in the hard coat composition prepared in the above-mentioned (3), dip-coated at a withdrawal rate of 400 mm/min, and dried and baked at 80°C for 30 minutes, whereby a hard coat layer was formed such that the thickness of the layer became 2100 nm. Thereafter, the plastic lens substrate thus treated was heated in an oven maintained at 125°C for 3 hours, whereby a plastic lens having the primer layer and the hard coat layer formed thereon was obtained.

### (5) Formation of antireflection layer

The plastic lens having the primer layer and the hard coat layer formed thereon was subjected to a plasma treatment (argon plasma 400 W × 60 sec), and a multilayered antireflection layer composed of five layers of SiO₂, ZrO₂, SiO₂, ZrO₂ and SiO₂ in the order from the substrate side to the air side was formed using a vacuum deposition device (manufactured by Shincron Co., Ltd.). Each layer was formed such that the optical film thicknesses of the first SiO₂ layer, the second and third ZrO₂ and SiO₂ equivalent film layers, the fourth ZrO₂ layer and the outermost fifth SiO₂ layer were λ/4, respectively, at a design wavelength λ of 520 nm.

### Example 2

A plastic lens having a primer layer, a hard coat layer, and an antireflection layer formed thereon was obtained in the same manner as in Example 1 except that the preparation of the hard coat composition in Example 1 was changed as follows.

### Preparation of hard coat composition

1000 parts by mass of Butyl Cellosolve and 2500 parts by mass of methanol were placed in a stainless steel vessel, and then, 1200 parts by mass of γ-glycidoxypropyltrimethoxysilane was added thereto, followed by sufficiently stirring. Then, 300 parts by mass of a 0.1 mol/L aqueous solution of hydrochloric acid was added thereto, followed by stirring for a whole day and night, whereby a silane hydrolysate was obtained. To this silane hydrolysate, 30 parts by mass of a silicone surfactant (manufactured by Dow Corning Toray Co., Ltd., trade name: L-7001) was added, followed by stirring for 1 hour. Then, 5000 parts by mass of a fine particle sol mainly containing tin oxide, zirconium oxide, and silicon oxide (methanol dispersion, total solid content: 30% by mass, manufactured by Nissan Chemical Industries, Ltd., trade name: Suncolloid) was added thereto, followed by stirring and mixing for 2 hours. Then, 250 parts by mass of an epoxy resin (manufactured by Nagase Kasei Kogyo K.K., trade name: EX-313) was added thereto, followed by stirring for 2 hours. Then, 20 parts by mass of iron(III) acetylacetonate was added thereto, followed by stirring for 1 hour, and then, the resulting mixture was filtered through a filter having a pore size of 2 µm, whereby a hard coat composition was obtained.

### Example 3

### (1) Production of plastic lens substrate

Under a nitrogen atmosphere, 90 parts by mass of bis(β-epithiopropyl)disulfide and 10 parts by mass of sulfur were mixed and stirred at 100°C for 1 hour. After the resulting mixture was cooled, 0.05 part by mass of tetrabutyl ammonium bromide as a catalyst was added to the mixture to form a homogeneous liquid. Then, the homogeneous liquid was filtered through a PTFE filter having a pore size of 0.5 µm, cast into a glass mold for molding a lens with a thickness of 1.2 mm, and cured by polymerization by raising the temperature from 10°C to 120°C over 22 hours in an oven, whereby a lens substrate was produced. The resulting lens substrate had a refractive index of 1.76 and an Abbe number of 33. Further, the lens substrate was transparent and showed a favorable surface condition.

### (2) Preparation of primer composition

6268 parts by mass of methyl alcohol and 100 parts by mass of a 0.1 N aqueous solution of sodium hydroxide were placed in a stainless steel vessel, followed by sufficiently stirring. Then, 2700 parts by mass of a composite fine particle sol mainly containing titanium oxide, tin oxide, and silicon oxide (rutile-type crystal structure, methanol dispersion, surface treatment agent: methyltrimethoxysilane, total solid content: 20% by mass, manufactured by Catalysts & Chemicals Industries Co., Ltd., trade name: Optolake) was added thereto, followed by stirring and mixing. Then, 815 parts by mass of a polyurethane resin (water dispersion, total solid content: 35% by mass, manufactured by Dai-ichi Kogyo Seiyaku Co., Ltd., trade name: Superflex 210 (424 parts by mass), and water dispersion, total solid content: 38% by mass, manufactured by Dai-ichi Kogyo Seiyaku Co., Ltd., trade name: Superflex 460 (391 parts by mass)), and 97 parts by mass (7% by mass in the primer layer) of phenyltrimethoxysilane (trade name: KBM-103 manufactured by Shin-Etsu Chemical Co., Ltd.), were added thereto, followed by stirring and mixing. Then, 2 parts by mass of a silicone surfactant (manufactured by Dow Corning Toray Co., Ltd., trade name: L-7604) was further added thereto, followed by stirring for a whole day and night, and then, the resulting mixture was filtered through a filter having a pore size of 2 µm, whereby a primer composition was obtained.

In Examples 1 and 2 described above, this Example, and Examples 4 to 6, which will be mentioned later, the average particle diameters are in accordance with the present invention, in that the average particle diameter of the polyurethane resin (component (A)) in the composition was 25 nm, the average particle diameter of the metal oxide fine particles (component (B)) was 20 nm, and the average particle diameter of fine particles formed from the organosilicon compound (component (C)) was 1 nm or less. The average particle diameters of these particles were obtained by scattering particles of each component in a solvent under the same condition as that in each Example, measuring particle diameters using a dynamic light scattering particle size distribution analyzer (manufactured by Horiba Seisakusho K.K., trade name: LB-550), and calculating the average particle diameters using the number of the particles as the particle size standard.

### (3) Preparation of hard coat composition

3380 parts by mass of Butyl Cellosolve was placed in a stainless steel vessel, and then, 1343 parts by mass of γ-glycidoxypropyltrimethoxysilane was added thereto, followed by sufficiently stirring. Then, 615 parts by mass of a 0.1 mol/L aqueous solution of hydrochloric acid was added thereto, followed by stirring for a whole day and night, whereby a silane hydrolysate was obtained. To this silane hydrolysate, 30 parts by mass of a silicone surfactant (manufactured by Dow Corning Toray Co., Ltd., trade name: L-7001) was added, followed by stirring for 1 hour. Then, 4333 parts by mass of a silicon oxide fine particle sol (isopropanol dispersion, solid content: 30% by weight, manufactured by JGC Catalysts and Chemicals Ltd., trade name: Oscal 1432) was added thereto, followed by stirring and mixing for 3 hours. Then, 250 parts by mass of an epoxy resin (manufactured by Nagase Kasei Kogyo K.K., trade name: EX-313) was added thereto, followed by stirring for 2 hours. Then, 27 parts by mass of iron(III) acetylacetonate and 9 parts by mass of manganese(III) acetylacetonate were added thereto, followed by stirring for 2 hours, and then, the resulting mixture was filtered through a filter having a pore size of 2 µm, whereby a hard coat composition was obtained.

### (4) Formation of primer layer and hard coat layer

First, the plastic lens substrate obtained in the above-mentioned (1) was subjected to an alkali treatment. Specifically, the plastic lens substrate was dipped in a 2 mol/L aqueous solution of potassium hydroxide maintained at 50°C for 5 minutes, and then rinsed with pure water. Then, the plastic lens substrate was dipped in 1.0 mol/L sulfuric acid maintained at 25°C for 1 minute to perform a neutralization treatment. Then, the plastic lens substrate was rinsed with pure water, dried and left stand for cooling.

Then, the lens substrate was dipped in the primer composition prepared in the above-mentioned (2), dip-coated at a withdrawal rate of 400 mm/min, and baked at 70°C for 20 minutes, whereby a primer layer was formed on the surface of the substrate such that the thickness of the layer after drying became 700 nm. Subsequently, the lens substrate having the primer layer formed thereon was dipped in the hard coat composition prepared in the above-mentioned (3), dip-coated at a withdrawal rate of 400 mm/min, and dried and baked at 80°C for 30 minutes, whereby a hard coat layer was formed such that the thickness of the layer became 2100 nm. Thereafter, the lens substrate thus treated was heated in an oven maintained at 125°C for 3 hours, whereby a plastic lens having the primer layer and the hard coat layer formed thereon was obtained. The refractive indices of the interior layer and the surface layer of this primer layer were 1.736 and 1.48, respectively.

### (5) Formation of antireflection layer

The plastic lens having the primer layer and the hard coat layer formed thereon was subjected to a plasma treatment (argon plasma 400 W × 60 sec), and a multilayered antireflection layer composed of five layers of SiO₂, ZrO₂, SiO₂, ZrO₂ and SiO₂ in the order from the substrate side to the air side was formed using a vacuum deposition device (manufactured by Shincron Co., Ltd.). Each layer was formed such that the optical film thicknesses of the first SiO₂ layer, the second and third ZrO₂ and SiO₂ equivalent film layers, the fourth ZrO₂ layer and the outermost fifth SiO₂ layer were λ/4, respectively, at a design wavelength λ of 520 nm.

### Example 4

A plastic lens was produced in the same manner as in Example 3 except that the primer composition was prepared as follows. The refractive indices of the interior layer and the surface layer of this primer layer were 1.741 and 1.48, respectively.

6248 parts by mass of methyl alcohol and 100 parts by mass of a 0.1 N aqueous solution of sodium hydroxide were placed in a stainless steel vessel, followed by sufficiently stirring. Then, 2700 parts by mass of a composite fine particle sol mainly containing titanium oxide, tin oxide, and silicon oxide (rutile-type crystal structure, methanol dispersion, surface treatment agent: methyltrimethoxysilane, total solid content: 20% by mass, manufactured by Catalysts & Chemicals Industries Co., Ltd., trade name: Optolake) was added thereto, followed by stirring and mixing. Then, 815 parts by mass of a polyurethane resin (water dispersion, total solid content: 35% by mass, manufactured by Dai-ichi Kogyo Seiyaku Co., Ltd., trade name: Superflex 210 (424 parts by mass), and water dispersion, total solid content: 38% by mass, manufactured by Dai-ichi Kogyo Seiyaku Co., Ltd., trade name: Superflex 460 (391 parts by mass)), and 117 parts by mass (7% by mass in the primer layer) of phenyltriethoxysilane (trade name: KBE-103 manufactured by Shin-Etsu Chemical Co., Ltd.), were added thereto, followed by stirring and mixing. Then, 2 parts by mass of a silicone surfactant (manufactured by Dow Corning Toray Co., Ltd., trade name: L-7604) was further added thereto, followed by stirring for a whole day and night, and then, the resulting mixture was filtered through a filter having a pore size of 2 µm, whereby a primer composition was obtained.

### Example 5

A plastic lens was produced in the same manner as in Example 3 except that the primer composition was prepared as follows. The refractive indices of the interior layer and the surface layer of this primer layer were 1.742 and 1.48, respectively.

6287 parts by mass of methyl alcohol and 100 parts by mass of a 0.1 N aqueous solution of sodium hydroxide were placed in a stainless steel vessel, followed by sufficiently stirring. Then, 2700 parts by mass of a composite fine particle sol mainly containing titanium oxide, tin oxide, and silicon oxide (rutile-type crystal structure, methanol dispersion, surface treatment agent: methyltrimethoxysilane, total solid content: 20% by mass, manufactured by Catalysts & Chemicals Industries Co., Ltd., trade name: Optolake) was added thereto, followed by stirring and mixing. Then, 815 parts by mass of a polyurethane resin (water dispersion, total solid content: 35% by mass, manufactured by Dai-ichi Kogyo Seiyaku Co., Ltd., trade name: Superflex 210 (424 parts by mass), and water dispersion, total solid content: 38% by mass, manufactured by Dai-ichi Kogyo Seiyaku Co., Ltd., trade name: Superflex 460 (391 parts by mass)), and 77 parts by mass (7% by mass in the primer layer) of diphenyldimethoxysilane (trade name: KBM-202SS manufactured by Shin-Etsu Chemical Co., Ltd.), were added thereto, followed by stirring and mixing. Then, 2 parts by mass of a silicone surfactant (manufactured by Dow Corning Toray Co., Ltd., trade name: L-7604) was further added thereto, followed by stirring for a whole day and night, and then, the resulting mixture was filtered through a filter having a pore size of 2 µm, whereby a primer composition was obtained.

### Example 6

A plastic lens was produced in the same manner as in Example 3 except that the primer composition was prepared as follows. The refractive indices of the interior layer and the surface layer of this primer layer were 1.760 and 1.48, respectively.

6242 parts by mass of methyl alcohol and 100 parts by mass of a 0.1 N aqueous solution of sodium hydroxide were placed in a stainless steel vessel, followed by sufficiently stirring. Then, 2700 parts by mass of a composite fine particle sol mainly containing titanium oxide, tin oxide, and silicon oxide (rutile-type crystal structure, methanol dispersion, surface treatment agent: methyltrimethoxysilane, total solid content: 20% by mass, manufactured by Catalysts & Chemicals Industries Co., Ltd., trade name: Optolake) was added thereto, followed by stirring and mixing. Then, 716 parts by mass of a polyurethane resin (water dispersion, total solid content: 35% by mass, manufactured by Dai-ichi Kogyo Seiyaku Co., Ltd., trade name: Superflex 210 (372 parts by mass), and water dispersion, total solid content: 38% by mass, manufactured by Dai-ichi Kogyo Seiyaku Co., Ltd., trade name: Superflex 460 (343 parts by mass)), and 77 parts by mass (11% by mass in the primer layer) of diphenyldimethoxysilane (trade name: KBM-202SS manufactured by Shin-Etsu Chemical Co., Ltd.), were added thereto, followed by stirring and mixing. Then, 2 parts by mass of a silicone surfactant (manufactured by Dow Corning Toray Co., Ltd., trade name: L-7604) was further added thereto, followed by stirring for a whole day and night, and then, the resulting mixture was filtered through a filter having a pore size of 2 µm, whereby a primer composition was obtained.

### Example 7

A plastic lens was produced in the same manner as in Example 3 except that the primer composition was prepared as follows.

2900 parts by mass of methyl alcohol and 50 parts by mass of a 0.1 N aqueous solution of sodium hydroxide were placed in a stainless steel vessel, followed by sufficiently stirring. Then, 1500 parts by mass of a composite fine particle sol mainly containing titanium oxide, tin oxide, and silicon oxide (rutile-type crystal structure, methanol dispersion, surface treatment agent: γ-glycidoxypropyltrimethoxysilane, total solid content: 20% by mass, manufactured by Catalysts & Chemicals Industries Co., Ltd., trade name: Optolake) was added thereto, followed by stirring and mixing. Then, 580 parts by mass of a polyurethane resin (water dispersion, total solid content: 35% by mass, average particle diameter: 60 nm), and 35 parts by mass of γ-glycidoxypropyltrimethoxysilane were added thereto, followed by stirring and mixing. Then, 2 parts by mass of a silicone surfactant (manufactured by Dow Corning Toray Co., Ltd., trade name: L-7604) was further added thereto, followed by stirring for a whole day and night, and then, the resulting mixture was filtered through a filter having a pore size of 2 µm, whereby a primer composition was obtained.

In the plastic lens having a primer layer obtained by using this primer composition, the level of interference fringe was good, however, in the visual evaluation, the occurrence of white turbidity (clouding) was somewhat observed.

### Example 8

A plastic lens was produced in the same manner as in Example 3 except that the primer composition was prepared as follows.

2900 parts by mass of methyl alcohol and 50 parts by mass of a 0.1 N aqueous solution of sodium hydroxide were placed in a stainless steel vessel, followed by sufficiently stirring. Then, 1500 parts by mass of a composite fine particle sol mainly containing titanium oxide, tin oxide, and silicon oxide (rutile-type crystal structure, methanol dispersion, surface treatment agent: γ-glycidoxypropyltrimethoxysilane, total solid content: 20% by mass, average particle diameter: 55 nm) was added thereto, followed by stirring and mixing. Then, 580 parts by mass of a polyurethane resin (water dispersion, total solid content: 35% by mass, manufactured by Dai-ichi Kogyo Seiyaku Co., Ltd., trade name: Superflex 210), and 35 parts by mass of γ-glycidoxypropyltrimethoxysilane were added thereto, followed by stirring and mixing. Then, 2 parts by mass of a silicone surfactant (manufactured by Dow Corning Toray Co., Ltd., trade name: L-7604) was further added thereto, followed by stirring for a whole day and night, and then, the resulting mixture was filtered through a filter having a pore size of 2 µm, whereby a primer composition was obtained.

In the plastic lens having a primer layer obtained by using this primer composition, the level of interference fringe was good, however, in the visual evaluation, the occurrence of white turbidity (clouding) was somewhat observed.

### Example 9

A plastic lens was produced in the same manner as in Example 3 except that the primer composition was prepared as follows.

2900 parts by mass of methyl alcohol and 50 parts by mass of a 0.1 N aqueous solution of sodium hydroxide were placed in a stainless steel vessel, followed by sufficiently stirring. Then, 1500 parts by mass of a composite fine particle sol mainly containing titanium oxide, tin oxide, and silicon oxide (rutile-type crystal structure, methanol dispersion, surface treatment agent: γ-glycidoxypropyltrimethoxysilane, total solid content: 20% by mass, manufactured by Catalysts & Chemicals Industries Co., Ltd., trade name: Optolake) was added thereto, followed by stirring and mixing. Then, 580 parts by mass of a polyurethane resin (water dispersion, total solid content: 35% by mass, manufactured by Dai-ichi Kogyo Seiyaku Co., Ltd., trade name: Superflex 210) and 35 parts by mass of γ-glycidoxypropyltrimethoxysilane (average particle diameter: 7 nm) which had been treated in advance with an alkali catalyst so as to accelerate hydrolytic condensation were added thereto, followed by stirring and mixing. Then, 2 parts by mass of a silicone surfactant (manufactured by Dow Corning Toray Co., Ltd., trade name: L-7604) was further added thereto, followed by stirring for a whole day and night, and then, the resulting mixture was filtered through a filter having a pore size of 2 µm, whereby a primer composition was obtained.

In the plastic lens having a primer layer obtained by using this primer composition, the level of interference fringe was somewhat good, and in the visual evaluation, the occurrence of white turbidity (clouding) was somewhat observed.

### Comparative example 1

A plastic lens having a primer layer, a hard coat layer, and an antireflection layer formed thereon was obtained in the same manner as in Example 1 except that the primer layer and the hard coat layer were formed using a primer composition and a hard coat composition prepared under the following conditions.

### Preparation of primer composition

3700 parts by mass of methyl alcohol, 250 parts by mass of pure water, and 1000 parts by mass of propylene glycol monomethyl ether were placed in a stainless steel vessel, followed by sufficiently stirring. Then, 2800 parts by mass of a composite fine particle sol mainly containing titanium oxide, tin oxide, and silicon oxide (rutile-type crystal structure, methanol dispersion, surface treatment agent: γ-glycidoxypropyltrimethoxysilane, total solid content: 20% by mass, manufactured by Catalysts & Chemicals Industries Co., Ltd., trade name: Optolake) was added thereto, followed by stirring and mixing. Then, 2200 parts by mass of a polyester resin was added thereto, followed by stirring and mixing. Then, 2 parts by mass of a silicone surfactant (manufactured by Dow Corning Toray Co., Ltd., trade name: L-7604) was further added thereto, followed by stirring for a whole day and night, and then, the resulting mixture was filtered through a filter having a pore size of 2 µm, whereby a primer composition was obtained.

### Preparation of hard coat composition

1000 parts by mass of Butyl Cellosolve was placed in a stainless steel vessel, and then, 1200 parts by mass of γ-glycidoxypropyltrimethoxysilane was added thereto, followed by sufficiently stirring. Then, 300 parts by mass of a 0.1 mol/L aqueous solution of hydrochloric acid was added thereto, followed by stirring for a whole day and night, whereby a silane hydrolysate was obtained. To this silane hydrolysate, 30 parts by mass of a silicone surfactant (manufactured by Dow Corning Toray Co., Ltd., trade name: L-7001) was added, followed by stirring for 1 hour. Then, 7300 parts by mass of a fine particle sol mainly containing titanium oxide, tin oxide, and silicon oxide (methanol dispersion, total solid content: 20% by mass, manufactured by Catalysts & Chemicals Industries Co., Ltd., trade name: Optolake 1120Z (8RS-25·A17)) was added thereto, followed by stirring and mixing for 2 hours. Then, 250 parts by mass of an epoxy resin (manufactured by Nagase Kasei Kogyo K.K., trade name: EX-313) was added thereto, followed by stirring for 2 hours. Then, 20 parts by mass of iron(III) acetylacetonate was added thereto, followed by stirring for 1 hour, and then, the resulting mixture was filtered through a filter having a pore size of 2 µm, whereby a hard coat composition was obtained.

### Comparative example 2

A plastic lens having a primer layer, a hard coat layer, and an antireflection layer formed thereon was obtained in the same manner as in Example 1 except that the primer layer was formed using the primer composition in Comparative example 1 and the hard coat layer was formed using the hard coat composition in Example 1.

### Evaluation methods

The thus obtained respective plastic lenses were evaluated by the following respective methods. The evaluation items were the following 6 items: interference fringe, scratch resistance, initial adhesion, moisture resistance, hot water resistance, and light resistance. The results for Examples 1 to 6, and Comparative examples 1 and 2 are shown in Table 1. With respect to Examples 7 to 9, the results of interference fringe are shown in Table 2.

### (a) Interference fringe

An interference fringe on the plastic lens was observed in a dark box and evaluated by classifying into the following 3 ranks.
O: The occurrence of interference fringe is not observed under a three-wavelength fluorescent lamp, and the plastic lens has an excellent appearance.
Δ: The occurrence of interference fringe is observed under a three-wavelength fluorescent lamp but is not observed under a lamp other than a three-wavelength fluorescent lamp.
×: The occurrence of interference fringe is observed under a three-wavelength fluorescent lamp and also a lamp other than a three-wavelength fluorescent lamp, and the plastic lens has a poor appearance.

### (b) Scratch resistance

A steel wool (manufactured by Nihon Steel Wool Co., Ltd., trade name: Bon Star #0000) was applied to the surface of the plastic lens under a load of 9.8 N (1 kgf) and reciprocated 10 times. The degree of scratches within an area of 1 cm x 3 cm was visually observed and evaluated by classifying into the following 5 ranks.
A: Scratches are not observed at all.
B: 1 to 5 scratches are observed.
C: 6 to 20 scratches are observed.
D: 21 or more scratches are observed.
E: Scratches are observed on the entire surface of the lens.

### (c) Initial adhesion

The adhesion at the interface between the respective layers of the lens substrate, primer layer, hard coat layer and antireflection layer was evaluated by the cross-cut tape test in accordance with the cross-cut adhesion method and cross-cut tape method described in JIS K5400 8.5.1 and 2. That is, the surface of the plastic lens was cut at 1 mm intervals with a cutter knife to form 100 square pieces having a side length of 1 mm. Thereafter, a cellophane adhesive tape (manufactured by Nichiban Co., Ltd., trade name: Sellotape (registered trademark)) was strongly pressed onto the thus formed cross-cut pieces, and then the adhesive tape was quickly peeled from the surface in the direction of 90 degrees. The number of square pieces remaining on the coat film after peeling was counted and evaluated based on the following 5 ranks.
A: No film peeling occurs (number of peeled square pieces: 0/100).
B: Almost no film peeling occurs (number of peeled square pieces: 1 to 5/100).
C: A little film peeling occurs (number of peeled square pieces: 6 to 20/100).
D: Film peeling occurs (number of peeled square pieces: 21 to 50/100).
E: Adhesion is poor (number of peeled square pieces: 51 to 100/100).

### (d) Moisture resistance

The plastic lens was left in a constant temperature and humidity chamber maintained at a temperature of 40°C and a relative humidity of 90% for 10 days, and thereafter, a cross-cut tape test was performed as described in the above-mentioned (c), and the number of square pieces remaining on the coat film was used as a moisture resistance index.

### (e) Hot water resistance

The plastic lens was dipped in a hot bath maintained at a temperature of 90°C for 2 hours, and thereafter, a cross-cut tape test was performed as described in the above-mentioned (c), and the number of square pieces remaining on the coat film was used as a hot water resistance index.

### (f) Light resistance

The convex surface (front surface (opposite side of the eye) of spectacle lens) of the plastic lens was exposed to a carbon arc sunshine weather meter (manufactured by Suga Test Instruments Co., Ltd.) for 200 hours, and thereafter, the lens was removed from the carbon arc sunshine weather meter and cooled with water. Then, a cross-cut tape test was performed as described in the above-mentioned (c), and the number of square pieces remaining on the coat film was used as a light resistance index.

**Table 1**

| | Interference fringe | Scratch resistance | Initial adhesion | Moisture resistance | Hot water resistance | Light resistance |
|---|---|---|---|---|---|---|
| Example 1 | ○ | a | A | A | A | A |
| Example 2 | ○ | a | A | A | A | A |
| Example 3 | ○ | b | A | A | A | A |
| Example 4 | ○ | b | A | A | A | A |
| Example 5 | ○ | b | A | A | A | A |
| Example 6 | ○ | b | A | A | A | A |
| Comparative example 1 | Δ | c | A | B | B | C |
| Comparative example 2 | × | b | A | B | B | B |

**Table 2**

| | Interference fringe |
|---|---|
| Example 7 | ○ |
| Example 8 | ○ |
| Example 9 | Δ |

### Results

From the results shown in Tables 1 and 2, in the spectacle lenses of Examples 1 to 9, a fine particle sol mainly containing silicon oxide is used in the hard coat layer, and therefore the hard coat layer has a low refractive index, however, the occurrence of interference fringe is not observed. The reason is presumably that the refractive index of the primer layer is sloped in the depth direction, and a difference in the refractive index at the interface between the primer layer and the hard coat layer becomes small. Further, it is found that the spectacle lenses of Examples 1 to 6 have favorable properties such as scratch resistance and light resistance. It is because a fine particle sol mainly containing silicon oxide is used in the hard coat layer, and therefore, the hardness and light resistance are excellent.

On the other hand, the spectacle lens of Comparative example 1 has relatively few interference fringes, but is poor in scratch resistance and light resistance. The reason is presumably that a fine particle sol mainly containing titanium oxide, tin oxide, and zirconium oxide is contained in the hard coat layer, and therefore, the hardness is decreased and also the light resistance is deteriorated. Further, in the spectacle lens of Comparative example 2, the occurrence of interference fringe is quite significant. The reason is presumed as follows. Since a fine particle sol mainly containing silicon oxide is used in the hard coat layer, the hard coat layer has a low refractive index, and also, a sloping phenomenon of the refractive index of the primer layer does not occur. Therefore, a difference in the refractive index at the interface between the hard coat layer having a low refractive index and the primer layer having a high refractive index becomes large.

A plastic lens produced by the process according to the invention can be applied to optical lenses such as lenses for spectacles, lenses for cameras, lenses for telescopes, lenses for microscopes and collective lenses for steppers.

## Claims

1. A process for producing a plastic lens composed of a plastic lens substrate comprising:
producing a plastic lens substrate by polymerizing and curing a polymerizable composition;
forming a primer layer and a hard coat layer on a surface of the plastic lens substrate, and
heat treating the plastic lens at a temperature of 40 to 200°C for several hours, wherein
in the formation of the primer layer, a coating composition containing the following components (A) to (C) is used:
(A) a polyurethane resin;
(B) metal oxide fine particles; and
(C) an organosilicon compound, and
in the formation of the hard coat layer, a coating composition containing the following component (D) and not containing titanium oxide is used:
(D) metal oxide fine particles; wherein
the average particle diameters of the component (A) and the component (B) in the coating composition are from 5 to 50 nm, respectively, and the average particle diameter of the fine particles from the component (C) is 5 nm or less, component (B) is metal oxide fine particles containing titanium oxide having a rutile-type crystal structure as a main component.

## Patentansprüche

1. Verfahren zum Herstellen einer aus einem Kunststofflinsensubstrat gebildeten Kunststofflinse, umfassend:
Herstellen eines Kunststofflinsensubstrats durch Polymerisieren und Härten einer polymerisierbaren Zusammensetzung;
Bilden einer Primer-Schicht und einer Hartbeschichtungsschicht auf einer Oberfläche des Kunststofflinsensubstrats und
Wärmebehandeln der Kunststofflinse bei einer Temperatur von 40 bis 200°C während einiger Stunden, wobei
bei der Bildung der Primer-Schicht eine Beschichtungszusammensetzung, die die folgenden Komponenten (A) bis (C) enthält, verwendet wird:
(A) ein Polyurethanharz;
(B) Metalloxid-Feinpartikel; und
(C) eine Organosiliciumverbindung, und
bei der Bildung der Hartbeschichtungsschicht eine Beschichtungszusammensetzung, die die folgende Komponente (D) enthält und kein Titanoxid enthält, verwendet wird:
(D) Metalloxid-Feinpartikel; wobei
die durchschnittlichen Partikeldurchmesser der Komponente (A) und der Komponente (B) in der Beschichtungszusammensetzung jeweils von 5 bis 50 nm betragen und der durchschnittliche Partikeldurchmesser der Feinpartikel aus der Komponente (C) 5 nm oder weniger beträgt,
Komponente (B) Metalloxid-Feinpartikel sind, die Titanoxid mit einer Kristallstruktur vom Rutil-Typ als eine Hauptkomponente enthalten.

## Revendications

1. Procédé de production d'une lentille en plastique composée d'un substrat de lentille en plastique comprenant :
la production d'un substrat de lentille en plastique par polymérisation et durcissement d'une composition polymérisable ;
la formation d'une couche d'apprêt et d'une couche de revêtement dure sur une surface du substrat de lentille en plastique, et
le traitement thermique de la lentille en plastique à une température de 40 à 200 °C pendant plusieurs heures, dans lequel
dans la formation de la couche d'apprêt, une composition de revêtement contenant les composants (A) à (C) suivants est utilisée :
(A) une résine de polyuréthane ;
(B) des particules fines d'oxyde métallique ; et
(C) un composé d'organosilicium, et
dans la formation de la couche de revêtement dure, une composition de revêtement contenant le composant (D) suivant et ne contenant pas d'oxyde de titane est utilisée :
(D) des particules fines d'oxyde métallique ; dans lequel
les diamètres moyens de particule du composant (A) et du composant (B) dans la composition de revêtement sont de 5 à 50 nm, respectivement, et le diamètre moyen de particule des particules fines du composant (C) est de 5 nm ou inférieur,
le composant (B) est des particules fines d'oxyde métallique contenant de l'oxyde de titane ayant une structure cristalline de type rutile comme composant principal.
